# EUROPEAN PATENT SPECIFICATION

(11) **EP 3 549 440 B1**
(45) Date of publication and mention of the grant of the patent: **03.08.2022**
(21) Application number: 18173382.5
(22) Date of filing: 19.05.2018
(51) Int. Cl.: A01K 89/00, A01K 89/01

(54) **SPINNING REEL WITH INTELLIGENT ALARM FUNCTION**
ANGELROLLE MIT INTELLIGENTER ALARMFUNKTION
BOBINE DE FILATURE À FONCTION D'ALARME INTELLIGENTE

(30) Priority: 03.04.2018 CN 201810290403
(43) Date of publication of application: 09.10.2019
(73) Proprietor: Cixi Xiang Yang Fishing Equipment Co., LTD., Cixi City, Ningbo Zhejiang (CN)
(72) Inventor: Zhang, Yuntang, Cixi City, Ningbo Zhejiang (CN); Cao, Junshan, Cixi City, Ningbo Zhejiang (CN)
(74) Representative: Cabinet Chaillot

(56) References cited:
- GB-A- 2 248 161
- US-A- 4 650 161
- US-B1- 7 364 105

## Description

### TECHNICAL FIELD

The disclosure relates to a spinning reel with an intelligent alarm function.

### BACKGROUND OF THE DISCLOSURE

Fishing reels, also known as spinning reels and line reels, are one of the fishing gears necessary for fishing by a casting rod (a telescopic fishing rod). However, the fishing reels in the prior art only have the functions of casting and reeling up the fishing line. When fishing, a fisherman must always pay attention to the situation of the fish bait, and the process of waiting for any fish to take the bait is rather boring, so if the fisherman wants to do something else, he will not be able to learn about the situation of the fish bait right away, and may have missed the best timing for catching the fishes when he comes back.

US4650161 A discloses in a spinning reel having a reel body and a spool at the front of the reel body for winding of fishing line, a handle extending from the reel body, a flyer, and means for causing rotation of the flyer in response to operation of the handle for winding fishing line about the spool, a spool shaft for mounting of the spool, the improvement comprising a line tension display unit carried by the body including a member swingable about the spool shaft and operatively connected to the spool shaft for swinging movement in response to the tension in the line, spring means for resisting such swing movement, the reel including a drag unit for coupling the spool to the spool shaft, including drag force setting means, the drag unit providing a drag force to permit drag-slippage rotation of the spool upon the line tension exceeding such drag force, and display means comprising a plurality of electronically powered display devices, operative in response to movement of the swinging member about the spool shaft, for displaying values of line tension.

### SUMMARY OF THE DISCLOSURE

A technical problem to be solved by the disclosure is to overcome the above technical problems and provide a spinning reel with an intelligent alarm function which provides an automatic judgment of the fish bite situations and sends an alarm to prompt the user to reel up the fishing line in time.

To solve the above technical problem, a solution defined in claim 1 discloses a spinning reel with an intelligent alarm function, comprising a reel body, a line reel which can reel up a fishing line being arranged on the reel body, and a line reel shell which can rotate relatively to the line reel being arranged on an outer peripheral side of the line reel, wherein an integrated circuit board, having a power switch arranged on one end thereof and a magnetic induction switch arranged on the other end thereof, is arranged in an internal cavity of the reel body, and an indicator light is arranged on the integrated circuit board; a battery case, which is provided with a battery and a loudspeaker therein, is arranged on an outer side of the bottom of the reel body, and a reaction button connected to the power switch is arranged at the bottom of the reel body; a front-rear brake switching lever configured to control the line reel is arranged on the reel body, a magnetic trigger wheel connected to the line reel is arranged at one end of the reel body far away from the line reel and is connected to a main shaft of the line reel, wherein the magnetic trigger wheel rotates together with the main shaft, a rear brake adjusting knob and a front brake adjusting knob are respectively arranged at both ends of the reel body, wherein the maximum braking force of a front brake is greater than the braking force of a rear brake; a rocker arm is arranged on one side of the reel body, and a locking slot is arranged on the magnetic trigger wheel, wherein a lock piece provided in the locking slot can slide in and out of the locking slot through the front-rear brake switching lever, and when the lock piece slides out of the locking slot of the magnetic trigger wheel by pulling the front-rear brake switching lever, so that the line reel drives the main shaft to rotate and the main shaft drives the magnetic trigger wheel to rotate, the magnetic induction switch is triggered to enable the loudspeaker to sound an alarm and the indicator light to flash.

Preferably, the magnetic trigger wheel is provided with 4 magnets which are distributed every 90 degrees and rotate 360 degrees for each turn.

Preferably, one end of the main shaft is connected to the line reel and the front brake adjusting knob and the other end thereof is connected to the rear brake adjusting knob.

Preferably, the magnetic induction switch is located on one side of the magnetic trigger wheel.

The disclosure has the following advantages over the prior art: an alarm device and a reel are integrated to reduce the quantity of equipment required for fishing, and the user can be liberated from a tedious waiting process to do other things, thereby increasing the fun of fishing.

### BRIEF DESCRIPTION OF THE DRAWINGS

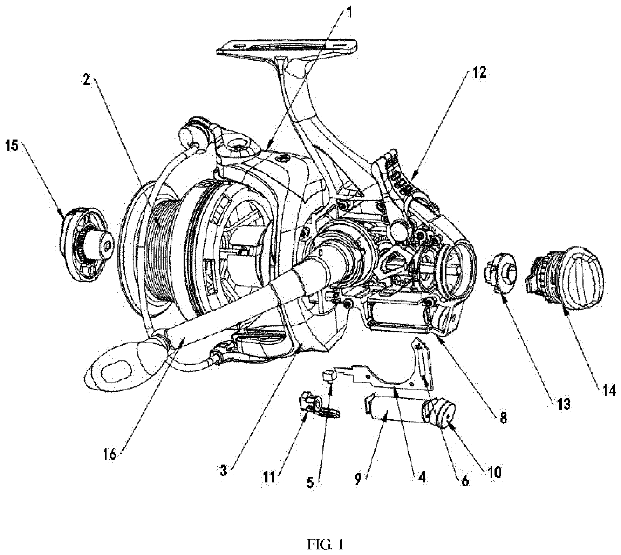

FIG. 1 is an exploded structural view of a spinning reel with an intelligent alarm function according to the disclosure;

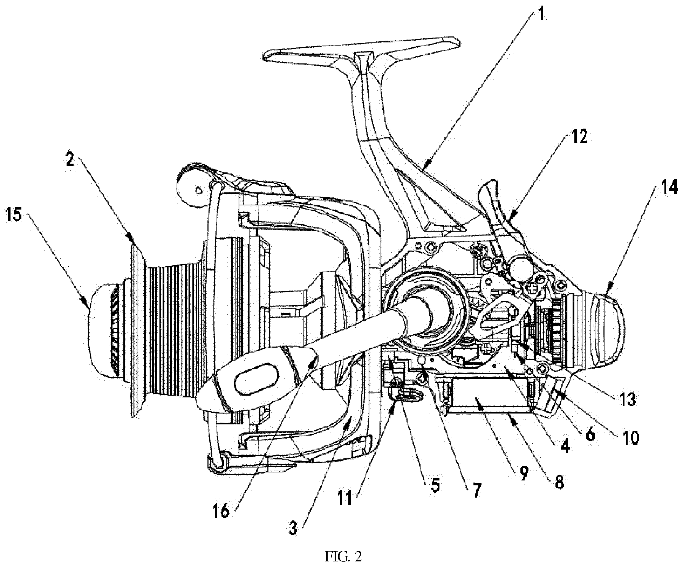

FIG. 2 is a left view of the spinning reel with an intelligent alarm function according to the disclosure;

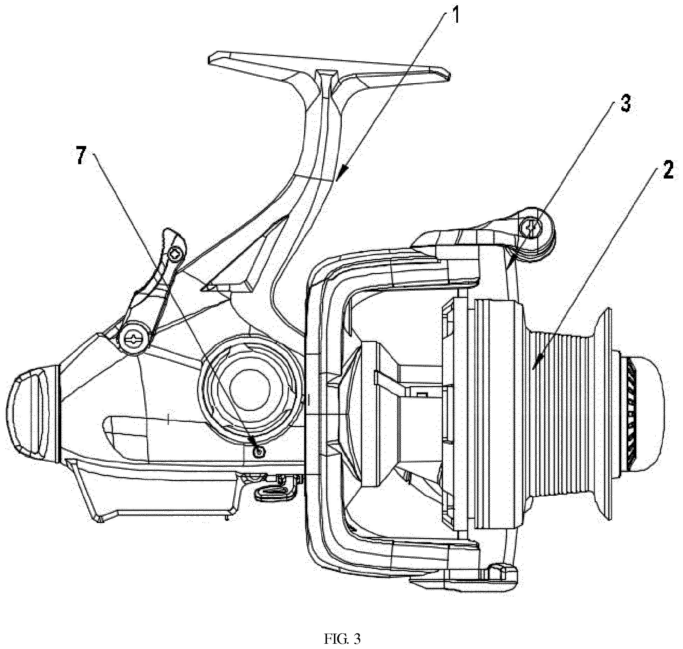

FIG. 3 is a right view of the spinning reel with an intelligent alarm function according to the disclosure; and

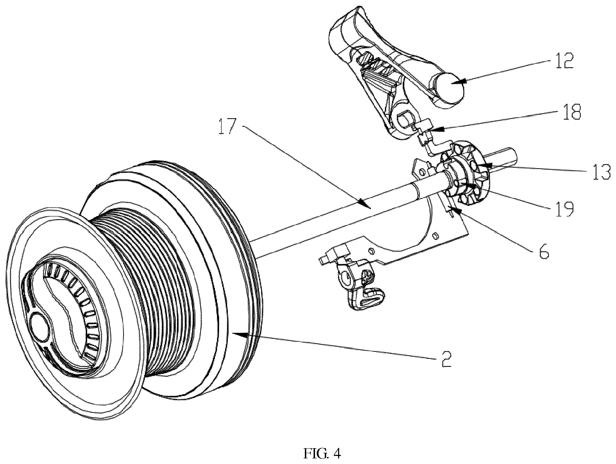

FIG. 4 is a schematic diagram of an alarm trigger structure of the spinning reel with an intelligent alarm function according to the disclosure.

As shown in the figures: 1 - reel body, 2 - line reel, 3 - line reel shell, 4 - integrated circuit board, 5- power switch, 6 - magnetic induction switch, 7 - indicator light, 8 - battery case, 9 - battery, 10 - loudspeaker, 11 - reaction button, 12 - front-rear brake switching lever, 13 - magnetic trigger wheel, 14 - rear brake adjusting knob, 15- front brake adjusting knob, 16 - rocker arm, 17 - main shaft, 18 - lock piece, and 19- magnet.

### DETAILED DESCRIPTION OF THE PREFERRED EMBODIMENTS

The disclosure will be further described in detail as follows with reference to the drawings.

With reference to the drawings, a spinning reel with an intelligent alarm function is provided, comprising a reel body 1, a line reel 2 which can reel up a fishing line being arranged on the reel body 1, and a line reel shell 3 which can rotate relatively to the line reel 2 being arranged on an outer peripheral side of the line reel 2, wherein an integrated circuit board 4, having a power switch 5 arranged on one end thereof and a magnetic induction switch 6 arranged on the other end thereof, is arranged in an internal cavity of the reel body 1, and an indicator light 7 is arranged on the integrated circuit board; a battery case 8, which is provided with a battery 9 and a loudspeaker 10 therein, is arranged on an outer side of the bottom of the reel body 1, and a reaction button 11 connected to the power switch 5 is arranged at the bottom of the reel body 1; a front-rear brake switching lever 12 configured to control the line reel 2 is arranged on the reel body 1, a magnetic trigger wheel 13 connected to the line reel 2 is arranged at one end of the reel body 1 far away from the line reel 2 and is connected to a main shaft 17 of the line reel 2, a rear brake adjusting knob 14 and a front brake adjusting knob 15 are respectively arranged at both ends of the reel body 1; a rocker arm 16 is arranged on one side of the reel body 1, and a locking slot provided with a lock piece 18 therein is arranged on the magnetic trigger wheel 13.

The magnetic trigger wheel 13 is provided with 4 magnets 19 which are distributed every 90 degrees and rotate 360 degrees for each turn.

One end of the main shaft 17 is connected to the line reel 2 and the front brake adjusting knob 15, and the other end thereof is connected to the rear brake adjusting knob 14 and to the magnetic trigger wheel 13 in series.

The magnetic induction switch 6 is located on one side of the magnetic trigger wheel 13.

According to the disclosure, the front brake adjusting knob adjusts a braking force (resistance) of the line reel with respect to the main shaft by pressing a brake block, the rear brake adjusting knob adjusts a braking force (resistance) of the rotation of the main shaft by pressing the brake block, and the maximum braking force of a front brake is greater than the braking force of a rear brake. The magnetic trigger wheel rotates together with the main shaft, and the lock piece in the locking slot can slide in and out of the locking slot through the front-rear brake switching lever. The magnetic induction switch is arranged on one side of the magnetic trigger wheel. In an initial state, the lock piece is inserted into the locking slot of the magnetic trigger wheel to lock the rotation of the magnetic trigger wheel and also lock the rotation of the main shaft which is connected to the magnetic trigger wheel. In case of entering a rear brake state by pulling the front-rear brake switching lever down, the lock piece slides out of the locking slot of the magnetic trigger wheel through a transmission structure, so that the magnetic trigger wheel and the main shaft can rotate. When the line reel rotates to drive the main shaft to rotate by the front braking force, the main shaft drives the magnetic trigger wheel to rotate. When the magnets on the magnetic trigger wheel are close to the magnetic induction switch, the magnetic induction switch is triggered to enable the loudspeaker to sound an alarm and the indicator light to flash. When the rocker arm is rotated by the transmission structure to reset the front-rear brake switching lever, the lock piece slides in the locking slot of the magnetic trigger wheel by the transmission structure, so that the magnetic trigger wheel and the main shaft are locked, and the alarm stops.

Step 1: Based on an existing fishing reel with front and rear brakes, the disclosure, after research and development, designs an electronic alarm system in the internal cavity of the reel body which can be waterproof and sealed. The electronic alarm system is an integrated circuit board, the indicator light is a strobe light, and the loudspeaker and the battery case are arranged on an outer side of the reel body for battery replacement and sound alarm.

Step 2: As in normal operation, the line reel shell is pushed to the right to be in a one-way state by the reaction button. At the same time, the indicator light is on when the power is turned on, and the lock piece slides out of the locking slot of the magnetic trigger wheel by pulling the front-rear brake switching lever. At this moment, the magnetic trigger wheel and the main shaft are both in a rotatable state, and the line wheel is in a rear brake state (a small braking force), thus enabling the magnetic trigger wheel to be connected to the main shaft in series so as to rotate along with the line reel.

Step 3: When the line reel is rotated by pulling the fishing line after the fish takes the bait, the line reel drives the main shaft to rotate and the main shaft drives the magnetic trigger wheel to rotate because the front braking force is greater than the rear braking force. The magnetic trigger wheel is provided with 4 magnets which are distributed every 90 degrees and rotate 360 degrees for each turn; when the magnets are close to the magnetic induction switch, the magnetic induction switch is triggered to enable the loudspeaker to sound an alarm to alert the fisherman and the indicator light to flash at the same time.

Step 4: The fisherman picks up the fishing rod and rotates the rocker arm after learning that the fish takes the bait by means of an alarm color or a light alarm, so that the lock piece is enabled to be inserted into the locking slot of the magnetic trigger wheel under the mechanical actions, the magnetic trigger wheel and the main shaft stop rotating, the alarm stops, and the front brake switching lever is reset to enable the product to enter a front brake state.

The above descriptions are merely preferred embodiments of the disclosure and are not intended to limit the disclosure. It will be appreciated by those skilled in the art that various modifications and variations can be made to the disclosure within the scope of the appended claims.

## Claims

1. A spinning reel with an intelligent alarm function, comprising a reel body (1), a line reel (2) which can reel up a fishing line being arranged on the reel body (1), and a line reel shell (3) which can rotate relatively to the line reel (2) being arranged on an outer peripheral side of the line reel (2), wherein an integrated circuit board (4), having a power switch (5) arranged on one end thereof and a magnetic induction switch (6) arranged on the other end thereof, is arranged in an internal cavity of the reel body (1), and an indicator light (7) is arranged on the integrated circuit board; a battery case (8), which is provided with a battery (9) and a loudspeaker (10) therein, is arranged on an outer side of the bottom of the reel body (1), and a reaction button (11) connected to the power switch (5) is arranged at the bottom of the reel body (1); a front-rear brake switching lever (12) configured to control the line reel (2) is arranged on the reel body (1), a magnetic trigger wheel (13) connected to the line reel (2) is arranged at one end of the reel body (1) far away from the line reel (2) and is connected to a main shaft (17) of the line reel (2), wherein the magnetic trigger wheel (13) rotates together with the main shaft (17), a rear brake adjusting knob (14) and a front brake adjusting knob (15) are respectively arranged at both ends of the reel body (1), wherein a maximum braking force of a front brake is greater than a braking force of a rear brake; a
rocker arm (16) is arranged on one side of the reel body (1), and a locking slot is arranged on the magnetic trigger wheel (13), wherein a lock piece (18) provided in the locking slot can slide in and out of the locking slot through the front-rear brake switching lever (12), and when the lock piece (18) slides out of the locking slot of the magnetic trigger wheel (13) by pulling the front-rear brake switching lever (12), so that the line reel (2) drives the main shaft (17) to rotate and the main shaft (17) drives the magnetic trigger wheel (13) to rotate, the magnetic induction switch (6) is triggered to enable the loudspeaker (10) to sound an alarm and the indicator light (7) to flash.

2. The spinning reel with an intelligent alarm function according to claim 1, wherein the magnetic trigger wheel (13) is provided with 4 magnets (19) which are distributed every 90 degrees and rotate 360 degrees for each turn.

3. The spinning reel with an intelligent alarm function according to claim 1, wherein one end of the main shaft (17) is connected to the line reel (2) and the front brake adjusting knob (15) and the other end thereof is connected to the rear brake adjusting knob (14) and to the magnetic trigger wheel (13) in series.

4. The spinning reel with an intelligent alarm function according to claim 1, wherein the magnetic induction switch (6) is located on one side of the magnetic trigger wheel (13).

## Patentansprüche

1. - Spinnrolle mit einer intelligenten Alarmfunktion, einen Rollenkörper (1), eine Schnurrolle (2), die eine Angelschnur aufrollen kann, die an dem Rollenkörper (1) angeordnet ist, und eine Schnurrollenhülse (3) umfassend, die sich relativ zu der Schnurrolle (2) drehen kann, die an einer äußeren Umfangsseite der Schnurrolle (2) angeordnet ist, wobei eine integrierte Leiterplatte (4) mit einem Leistungsschalter (5), der an deren einem Ende angeordnet ist, und einem Magnetinduktionsschalter (6), der an deren anderem Ende angeordnet ist, in einem inneren Hohlraum des Rollenkörpers (1) angeordnet ist, und eine Anzeigeleuchte (7) an der integrierten Leiterplatte angeordnet ist, wobei ein Batteriegehäuse (8), das mit einer Batterie (9) und einem Lautsprecher (10) darin versehen ist, an einer äußeren Seite des Bodens des Rollenkörpers (1) angeordnet ist und eine Reaktionstaste (11), die mit dem Leistungsschalter (5) verbunden ist, an dem Boden des Rollenkörpers (1) angeordnet ist, wobei ein Front-Heckbremsschalthebel (12), der dafür gestaltet ist, die Schnurrolle (2) zu steuern, an dem Rollenkörper (1) angeordnet ist, ein Magnetimpulsgeberrad (13), das mit der Schnurrolle (2) verbunden ist, an einem Ende des Rollenkörpers (1) weit weg von der Schnurrolle (2) angeordnet und mit einer Hauptwelle (17) der Schnurrolle (2) verbunden ist, wobei sich das Magnetimpulsgeberrad (13) zusammen mit der Hauptwelle (17) dreht, ein Heckbremseinstellknopf (14) beziehungsweise ein Frontbremseinstellknopf (15) an den beiden Enden des Rollenkörpers (1) angeordnet sind, wobei eine maximale Bremskraft einer Frontbremse größer als eine Bremskraft einer Heckbremse ist, wobei ein Kipphebel (16) an einer Seite des Rollenkörpers (1) angeordnet ist und ein Arretierungsschlitz an dem Magnetimpulsgeberrad (13) angeordnet ist, wobei ein Arretierungsstück (18), das in dem Arretierungsschlitz bereitgestellt ist, durch den Front-Heckbremsschalthebel (12) in den und aus dem Arretierungsschlitz gleiten kann und wenn das Arretierungsstück (18) durch Ziehen an dem Front-Heckbremsschalthebel (12) aus dem Arretierungsschlitz des Magnetimpulsgeberrades (13) gleitet, so dass die Schnurrolle (2) die Hauptwelle (17) zur Drehung antreibt und die Hauptwelle (17) das Magnetimpulsgeberrad (13) zur Drehung antreibt, der Magnetinduktionsschalter (6) angesteuert wird, den Lautsprecher (10) zu aktivieren, einen Alarm auszustoßen, und die Anzeigeleuchte (7) zu aktivieren, zu leuchten.

2. - Spinnrolle mit einer intelligenten Alarmfunktion nach Anspruch 1, wobei das Magnetimpulsgeberrad (13) mit 4 Magneten (19) versehen ist, die alle 90 Grad verteilt angeordnet sind und sich bei jeder Drehung 360 Grad drehen.

3. - Spinnrolle mit einer intelligenten Alarmfunktion nach Anspruch 1, wobei ein Ende der Hauptwelle (17) mit der Schnurrolle (2) und dem Frontbremseinstellknopf (15) verbunden ist und das andere Ende mit dem Heckbremseinstellknopf (14) und dem Magnetimpulsgeberrad (13) in Reihe verbunden ist.

4. - Spinnrolle mit einer intelligenten Alarmfunktion nach Anspruch 1, wobei sich der Magnetinduktionsschalter (6) an einer Seite des Magnetimpulsgeberrades (13) befindet.

## Revendications

1. - Moulinet à lancer léger ayant une fonction d'alarme intelligente, comprenant un corps de moulinet (1), un dévidoir (2) qui peut enrouler une ligne de pêche étant disposé sur le corps de moulinet (1), et une coque de dévidoir (3) qui peut tourner par rapport au dévidoir (2) étant disposée sur un côté périphérique extérieur du dévidoir (2), une carte de circuit intégré (4), ayant un interrupteur d'alimentation (5) disposé sur une extrémité de celle-ci et un interrupteur à induction magnétique (6) disposé sur l'autre extrémité de celle-ci, étant disposée dans une cavité interne du corps de moulinet (1), et un voyant lumineux (7) étant disposé sur la carte de circuit intégré ; un logement de batterie (8), qui comporte une batterie (9) et un haut-parleur (10) à l'intérieur de celui-ci, étant disposé sur un côté extérieur de la partie inférieure du corps de moulinet (1), et un bouton de réaction (11) relié à l'interrupteur d'alimentation (5) étant disposé à la partie inférieure du corps de moulinet (1) ; un levier de commutation de frein avant-arrière (12) configuré pour commander le dévidoir (2) étant disposé sur le corps de moulinet (1), une roue de déclenchement magnétique (13) reliée au dévidoir (2) étant disposée à une extrémité du corps de moulinet (1) à distance du dévidoir (2) et étant reliée à un arbre principal (17) du dévidoir (2), la roue de déclenchement magnétique (13) tournant conjointement avec l'arbre principal (17), un bouton de réglage de frein arrière (14) et un bouton de réglage de frein avant (15) étant disposés respectivement aux deux extrémités du corps de moulinet (1), une force de freinage maximale d'un frein avant étant supérieure à une force de freinage d'un frein arrière ; un bras oscillant (16) est disposé sur un côté du corps de moulinet (1), et une fente de verrouillage est disposée sur la roue de déclenchement magnétique (13), une pièce de verrouillage (18) prévue dans la fente de verrouillage pouvant glisser dans et hors de la fente de verrouillage par l'intermédiaire du levier de commutation de frein avant-arrière (12) et, lorsque la pièce de verrouillage (18) coulisse hors de la fente de verrouillage de la roue de déclenchement magnétique (13) par traction du levier de commutation de frein avant-arrière (12), de telle sorte que le dévidoir (2) amène l'arbre principal (17) à tourner et que l'arbre principal (17) amène la roue de déclenchement magnétique (13) à tourner, l'interrupteur à induction magnétique (6) étant déclenché pour permettre au haut-parleur (10) de faire retentir une alarme et au voyant lumineux (7) de clignoter.

2. - Moulinet à lancer léger ayant une fonction d'alarme intelligente selon la revendication 1, dans lequel la roue de déclenchement magnétique (13) comporte 4 aimants (19) qui sont répartis tous les 90 degrés et tournent de 360 degrés pour chaque tour.

3. - Moulinet à lancer léger ayant une fonction d'alarme intelligente selon la revendication 1, dans lequel une extrémité de l'arbre principal (17) est reliée au dévidoir (2) et au bouton de réglage de frein avant (15) et l'autre extrémité de celui-ci est reliée au bouton de réglage de frein arrière (14) et à la roue de déclenchement magnétique (13) en série.

4. - Moulinet à lancer léger ayant une fonction d'alarme intelligente selon la revendication 1, dans lequel l'interrupteur à induction magnétique (6) est situé sur un côté de la roue de déclenchement magnétique (13).
